# EUROPÄISCHE PATENTSCHRIFT

(11) **EP 0 521 512 B1**
(45) Veröffentlichungstag und Bekanntmachung des Hinweises auf die Patenterteilung: **24.04.1996**
(21) Anmeldenummer: 92111265.2
(22) Anmeldetag: 03.07.1992
(51) Int. Cl.: B01D 25/176

(54) **Filtertucheinheit für Kammerfilterpressen**
Filter cloth unit for chamber filter presses
Ensemble de toile filtrante pour filtres-presses à chambres

(30) Priorität: 05.07.1991 DE 9108330 U
(43) Veröffentlichungstag der Anmeldung: 07.01.1993
(73) Patentinhaber: OTTO MARKERT & SOHN, D-24539 Neumünster (DE)
(72) Erfinder: Schinkitz, Dieter, Dr., W-5090 Leverkusen 3 (DE); Wengler, Helmuth, W-2000 Hamburg 61 (DE)
(74) Vertreter: Glawe, Delfs, Moll & Partner

(56) Entgegenhaltungen:
- FR-A- 1 393 440
- GB-A- 704 307
- US-A- 1 694 956

## Beschreibung

Die Erfindung betrifft eine Filtertucheinheit für Kammerfilterpressen mit einer Randabdichtung, einem Filtertuch und einem Stütztuch.

Bei Kammerfilterpressen werden Filtertucheinheiten zwischen den Filterplatten angeordnet und eingespannt. Die zu filtrierende Trübe wird dann in den Zwischenraum zwischen zwei Filtertucheinheiten gepumpt, die sich zwischen zwei Filterplatten befinden, und zwar gewöhnlich von einem alle Filterplatten und Filtertucheinheiten durchsetzenden Kanal, der in vielen Fällen in der Mitte der Filterplatten angeordnet ist. Das Filtrat strömt dann durch die Filtertucheinheiten in die Kammern der Filterplatten, von wo es abgeleitet wird. Der Rückstand, der sogenannte Filterkuchen, sammelt sich zwischen den Filtertucheinheiten an.

Damit das Filtrat nicht am Rande zwischen zwei Filterplatten herauslaufen kann, ist hier ein Rand vorgesehen, der breiter ist als der Hauptteil der Filterplatten, der sogenannte Filterspiegel, in dem die Filtrierung stattfindet. Der entsprechende erhöhte Rand kann auf den Filterplatten vorgesehen sein oder als separater Rahmen ausgebildet sein. In diesem Randbereich werden die Filterplatten zusammengedrückt. Die Filtertucheinheit weist dabei eine Randabdichtung auf, die in den Bereich der erhöhten Ränder der Filterplatten oder der entsprechenden Rahmen zu liegen kommt. Die Randabdichtung hat den Vorteil, daß sie den Durchtritt von Flüssigkeiten durch den Rand verhindert oder verringert, der auftreten würde, wenn der Rand ebenfalls aus dem für Flüssigkeit gut durchlässigen Filtertuch bestehen würde.

Häufig sieht man auch im Bereich der Filterspiegel noch Stütznoppen vor, damit sich die Platten mit den Stütznoppen gegenseitig abstützen können, so daß hier keine Durchbiegungen auftreten.

Im Bereich dieser Stütznoppen liegt das Filtertuch nur punktweise auf, so daß es insbesondere bei monofilen Geweben leicht zu Überdehnung und Zerstörung einzelner Fäden kommt. Diese ungleichmäßige Belastung des Filtertuches verkürzt ganz erheblich dessen Lebensdauer. Es ist daher bekannt, zwischen Filterplatte und Filtertuch ein sogenanntes Stütztuch vorzusehen, das mechanisch stabil ist und nicht so fein wie das Filtertuch ist und zu sein braucht, da es keine Filterfunktion hat. Ein solches Stütztuch kann in vielen Fällen bei einer Kammerfilterpresse an der Platte im Bereich des Filterspiegels befestigt werden. Dies ist aber bei sogenannten Membranpressen nicht möglich.

Bei diesen Membranpressen befindet sich zwischen Filtertucheinheit und Filterplatte noch eine Membran, z.B. eine Gummimembran, mit Hilfe derer der Filterkuchen zusammengedrückt und somit teilweise entfeuchtet werden kann, wenn die Membran mit einem Druckfluid beaufschlagt wird. Sieht man solche Membranen vor, die selbstverständlich druckfluid-dicht sein müssen, so ist die Befestigung des Stütztuchs an der Filterplatte nicht mehr möglich. Auch bei Membranfilterpressen ist aber ein Stütztuch im allgemeinen erforderlich, da auch auf den Membranen Kannelierungen in Form von z.B. Noppen angeordnet sind, die ebenfalls ein direkt darüberliegendes Filtergewebe angreifen würden.

Es ist ein flächenförmiges Zwischenelement für Filtertücher bekannt, das auch Stützfunktionen hat (FR-A-1 393 440), das allerdings nicht die Form eines Tuches, sondern einer dünnen Platte hat. Dieses Element ist mit einem umlaufenden Dichtprofil aus einem gummiähnlichen Material versehen, wobei das umlaufende Dichtprofil verhindert, daß das eigentliche Filtertuch, das über das Element mit Dichtprofil noch gespannt werden müßte, mit dem meist metallischen Filterplattenrand direkt in Kontakt kommen kann. Außerdem können durch die Gummiprofileinfassung des offenporigen Gitters auch die Gitterränder des Filtertuchs nicht zerstört werden. Über die Anbringung dieses Elements an der Filterplatte, insbesondere über ein Hindurchstecken durch die Mittelöffnung der Filterplatte (was aufgrund des plattenförmigen Materials des Zwischenelementes gar nicht möglich sein dürfte) ist nichts gesagt. Es ist fraglich, ob ein solches plattenförmiges Element im Zusammenhang mit Membranfilterpressen verwendet werden kann. Auf jeden Fall ist das Einsetzen der Filtertücher kompliziert, da sowohl das Zwischenelement als auch das Filtertuch separat eingesetzt werden müssen.

Die Aufgabe der Erfindung besteht in der Schaffung einer Filtertucheinheit, die ein Stütztuch aufweist und universal, insbesondere auch bei Membranfilterpressen einsetzbar ist.

Die erfindungsgemäße Lösung besteht darin, daß das Stütztuch auf einer Seite und am inneren Rand der Randabdichtung und das Filtertuch auf der anderen Seite und am äußeren Rand derselben befestigt ist.

An der Randabdichtung der Filtertucheinheit ist an deren innerem Rand das Stütztuch befestigt, so daß es einerseits das eigentliche Filtertuch im Bereich des gesamten Filterspiegels abstützen kann, andererseits aber doch nicht durch den Randbereich zwischen einzelnen Platten bis nach außen geführt wird, da dann hier wieder viel Flüssigkeit herausströmen würde. Dies wäre noch eher als bei dem Filtertuch zu befürchten, da das Stütztuch im allgemeinen relativ grobmaschig ist.

Andererseits ist aber das Filtertuch am äußeren Teil der Randabdichtung befestigt. Das Filtertuch erstreckt sich also bis über den Rand der Platten hinaus, so daß an den Verbindungsstellen zwischen Randabdichtung und Filtertuch keine Probleme beim Filtrieren auftreten können, weil hier das Filtertuch z.B. durch Nähen leicht beschädigt ist und daher Trübe hindurch gelangen kann.

Es ist also erfindungsgemäß das Stütztuch innen an der Randabdichtung und das Filtertuch außen an der Randabdichtung befestigt. Das Stütztuch ist dabei am Innenrand der Randabdichtung mit derselben verbunden, und zwar an der Stelle, die dem Bereich entspricht, an der die Filterplatte vom Rand zum Filterspiegel zurückspringt.

Zweckmäßigerweise besteht die Randabdichtung aus Nadelfilz. Das Filtertuch und auch das Stütztuch bestehen zweckmäßigerweise aus monofilem Gewebe.

Als besonders zweckmäßig hat es sich erwiesen, wenn das Filtertuch als Durchstecktuch ausgebildet ist. Das Filtertuch liegt dann auf beiden Seiten einer Filterplatte auf, wobei die beiden Filtertuchhälften der Filtertucheinheit durch ein schlauchförmiges Element miteinander verbunden sind, das durch ein entsprechendes Loch in der Filterplatte hindurchgesteckt ist.

Die Erfindung wird im folgenden anhand einer vorteilhaften Ausführungsform unter Bezugnahme auf die beigefügten Zeichnungen beschrieben. Es zeigen in schematischer Darstellung:
- Fig. 1: den prinzipiellen Aufbau einer Kammerfilterpresse; und
- Fig. 2: die erfindungsgemäße Filtertucheinheit.

Eine Kammerfilterpresse ist aus mehreren Platten 1 aufgebaut, die in der Mitte ein Loch 2 aufweisen, durch das der Schlauch 3 gesteckt ist, der zwei Filtertucheinheithälften 4 verbindet. Die Filterplatten 1 sind am Rande mit Randverdickungen 5 versehen, die auch als separate Rahmen ausgebildet sein könnten. Im Bereich dieser Randverdickungen wird diese Anordnung in Richtung der Pfeile 6 zusammengedrückt, so daß hier zwischen Filtertüchern 4 und Filterplatten 1 kein Raum verbleibt, durch den Flüssigkeit herausströmt.

Die zu filtrierende Flüssigkeit wird durch den Raum in die Filterpresse gepumpt, der durch die Löcher 2 der Filterplatten 1 gebildet ist, und zwar in Richtung des Pfeils 7. Die zu filtrierende Flüssigkeit gelangt dabei zwischen zwei benachbarte Filtertücher und tritt in Richtung der Pfeile 8 durch diese hindurch und in die Filterplatten ein, von wo die filtrierte Flüssigkeit in Richtung der Pfeile 9 abströmt. Zwischen den Filtertüchern 4 sammelt sich dann im Raum, der mit 10 bezeichnet ist, der Filterkuchen an. Bei der gezeigten Ausführungsform sind die Filterplatten 1 noch mit Stütznoppen 11 versehen, damit sich die Filterplatten beim Betrieb nicht durchbiegen können.

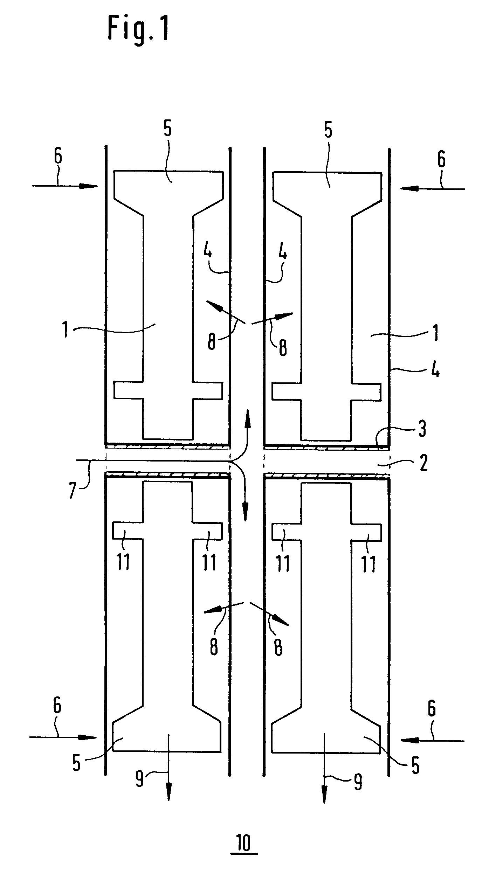

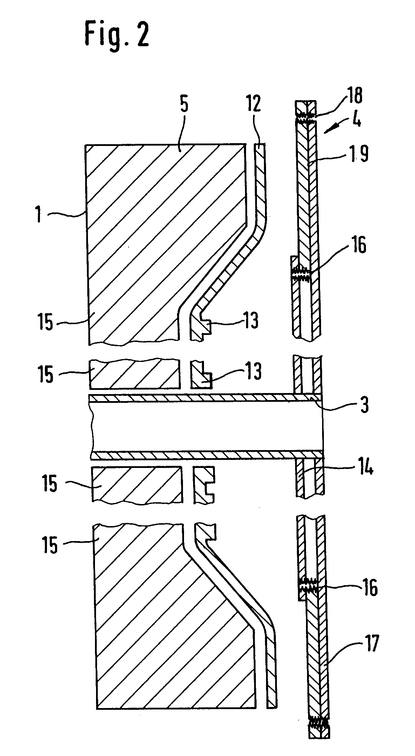

In Fig. 2 ist in schematischer und ähnlicher Darstellung wie in Fig. 1 eine Filterplatte mit einer Hälfte einer Filtertucheinheit 4 gezeigt. Zwischen Filtertucheinheit 4 und Filterplatte 1 ist dabei noch eine Membran 12 gezeigt, die mit Druck beaufschlagt werden kann, um die Filtertucheinheit 4 der Fig. 2 nach rechts zu drücken, so daß rechts neben der Filtertucheinheit 4 befindlicher Filterkuchen entwässert wird bzw. sonstige Feuchtigkeit aus ihm zumindest teilweise herausgedrückt wird. Die Membran 12 weist dabei das Abfließen der gefilterten Flüssigkeit ermöglichende Noppen 13 auf, die das empfindliche Filtertuchgewebe ebenso wie die Stütznoppen 11 beschädigen könnten. Um dies zu verhindern, weist die Filtertucheinheit 4 auf der zur Platte gerichteten Seite im Bereich des Filterspiegels ein Stütztuch 14 auf, das an der Stelle mit einer Randabdichtung 19 der Filtertucheinheit verbunden ist, in der die Filterplatte 1 von der Randverdickung 5 zum Filterspiegel 15 zurückspringt. Die Verbindung ist dabei insbesondere mit Hilfe einer Naht 16 hergestellt. Auf der anderen Seite ist das Filtertuch 17 befestigt, das bei 18 an einer Stelle mit der Randabdichtung 19 verbunden, insbesondere vernäht ist, die außerhalb des Bereichs der Filterplatten 1 liegt.

## Patentansprüche

1. Filtertucheinheit für Kammerfilterpressen mit einer Randabdichtung, einem Filtertuch und einem Stütztuch, wobei das Stütztuch (14) auf einer Seite und am inneren Rand der Randabdichtung (19) und das Filtertuch (17) auf der anderen Seite und am äußeren Rand derselben befestigt ist.

2. Filtertucheinheit nach Anspruch 1, dadurch gekennzeichnet, daß das Stütztuch (14) an der Randabdichtung (19) angenäht ist.

3. Filtertucheinheit nach Anspruch 1 oder 2, dadurch gekennzeichnet, daß die Randabdichtung (15) aus Nadelfilz besteht.

4. Filtertucheinheit nach einem der Ansprüche 1 bis 3, dadurch gekennzeichnet, daß das Filtertuch (17) aus monofilem Gewebe besteht.

5. Filtertucheinheit nach einem der Ansprüche 1 bis 4, dadurch gekennzeichnet, daß das Stütztuch (14) aus monofilem Gewebe besteht.

6. Filtertucheinheit nach einem der Ansprüche 1 bis 5, dadurch gekennzeichnet, daß das Filtertuch (17) als Durchstecktuch ausgebildet ist.

## Claims

1. Filter cloth unit for chamber filter presses, having a border seal, a filter cloth and a supporting cloth, the supporting cloth (14) being fastened on one side on the inner border of the border seal (19) and the filter cloth (17) being fastened on the other side on the outer border of the same.

2. Filter cloth unit according to Claim 1, characterized in that the supporting cloth (14) is sewn on the border seal (19).

3. Filter cloth unit according to Claim 1 or 2, characterized in that the border seal (15) consists of needle felt.

4. Filter cloth unit according to Claims 1 to 3, characterized in that the filter cloth (17) consists of a monofilament fabric.

5. Filter cloth unit according to one of Claims 1 to 4, characterized in that the supporting cloth (14) consists of a monofilament fabric.

6. Filter cloth unit according to one of Claims 1 to 5, characterized in that the filter cloth (17) is designed as an insertion cloth.

## Revendications

1. Ensemble formant tissu filtrant pour des filtres-presses à chambres comprenant une étanchéité marginale, un tissu filtrant et un tissu formant support, le tissu formant support (14) étant fixé d'une part sur la paroi intérieure de l'étanchéité marginale (19) et d'autre part sur la paroi extérieure du tissu filtrant (17).

2. Ensemble formant tissu filtrant selon la revendication 1, caractérisé en ce que le tissu formant support (14) est cousu à l'étanchéité marginale (19).

3. Ensemble formant tissu filtrant selon la revendication 1 ou 2, caractérisé en ce que l'étanchéité marginale (19) est constituée d'un feutre tissé.

4. Ensemble formant tissu filtrant selon l'une quelconque des revendications 1 à 3, caractérisé en ce que le tissu filtrant (17) est constitué d'un tissu monofil.

5. Ensemble formant tissu filtrant selon l'une quelconque des revendications 1 à 4, caractérisé en ce que le tissu formant support (14) est constitué d'un tissu monofil.

6. Ensemble formant tissu filtrant selon l'une quelconque des revendications 1 à 5, caractérisé en ce que le tissu filtrant (17) est formé en tant que tissu traversant.
